# EUROPÄISCHE PATENTANMELDUNG

(11) **EP 3 587 111 A1**
(43) Veröffentlichungstag der Anmeldung: **01.01.2020**
(21) Anmeldenummer: 19183955.4
(22) Anmeldetag: 24.05.2017
(51) Int. Cl.: B33Y 30/00, B29C 64/245, B29C 64/25, B29C 64/153, B22F 3/105

(54) **PULVERKAMMERTISCHANORDNUNG**

(30) Priorität: 29.07.2016 DE 102016114054
(62) Teilanmeldung aus: 17172788.6
(71) Anmelder: CL Schutzrechtsverwaltungs GmbH, 96215 Lichtenfels (DE)
(72) Erfinder: Herzog, Frank, 96215 Lichtenfels (DE); Schödel, Frank, 96317 Kronach (DE); Bechmann, Florian, 96215 Lichtenfels (DE)
(74) Vertreter: Hafner & Kohl Patent- und Rechtsanwälte Partnerschaft mbB

(57) **Zusammenfassung**

Pulverkammertischanordnung (1) für ein Pulvermodul, insbesondere ein Baumodul, einer Vorrichtung zur additiven Herstellung dreidimensionaler Objekte, umfassend wenigstens zwei gegeneinander, insbesondere im Hinblick auf das Eindringen von pulverförmigem Baumaterial, abzudichtende Bauteile oder Bauteilgruppen, wobei die wenigstens zwei Bauteile oder Bauteilgruppen durch wenigstens ein Dichtelement (9) gegeneinander abgedichtet sind.

## Beschreibung

Die Erfindung betrifft eine Pulverkammertischanordnung für ein Pulvermodul, insbesondere ein Baumodul, einer Vorrichtung zur additiven Herstellung dreidimensionaler Objekte, umfassend wenigstens zwei gegeneinander, insbesondere im Hinblick auf das Eindringen von pulverförmigem Baumaterial, abzudichtende Bauteile oder Bauteilgruppen, wobei die wenigstens zwei Bauteile oder Bauteilgruppen durch wenigstens ein Dichtelement gegeneinander abgedichtet sind.

Pulverkammertischanordnungen sind als Funktionskomponenten von Pulvermodulen, welche typischerweise einen Pulverraum zur Aufnahme oder Abgabe von pulverförmigem Baumaterial umfassen, an und für sich bekannt. Der konstruktive Aufbau entsprechender Pulverkammertischanordnungen sieht mehrere unterschiedlich funktionalisierte Bauteile bzw. Bauteilgruppen vor, wobei typischerweise wenigstens zwei Bauteile oder Bauteilgruppen im Hinblick auf das Eindringen von pulverförmigem Baumaterial gegeneinander abzudichten sind. Um das Eindringen von pulverförmigem Baumaterial zwischen die Bauteile bzw. Bauteilgruppen zu verhindern, ist es üblich, entsprechende Bauteile oder Bauteilgruppen durch ein Dichtelement gegeneinander abzudichten.

Bisher verwendete Dichtelemente sind im Hinblick auf ihre ihre Dichtungswirkung und das damit verbundene Dichtungspotential betreffenden strukturellen Eigenschaften verbesserungswürdig, als diese z. B. eine vergleichsweise geringe thermische Stabilität bzw. eine vergleichsweise geringe Elastizität bzw. Flexibilität aufweisen.

Der Erfindung liegt die Aufgabe zugrunde, eine demgegenüber, insbesondere im Hinblick auf Dichtungswirkung und Dichtungspotential, verbesserte Pulverkammertischanordnung anzugeben.

Die Aufgabe wird durch eine Pulverkammertischanordnung gemäß Anspruch 1 gelöst. Die hierzu abhängigen Ansprüche betreffen mögliche Ausführungsformen der Pulverkammertischanordnung.

Die hierin beschriebene Pulverkammertischanordnung stellt eine Funktionskomponente eines Pulvermoduls, d. h. insbesondere eines Baumoduls, in welchem im Rahmen additiver Herstellungsvorgänge der eigentliche additive Aufbau dreidimensionaler Objekte erfolgt, dar. Das Pulvermodul stellt wiederum eine Funktionskomponente einer Vorrichtung zur additiven Herstellung dreidimensionaler Objekte dar. Bei der Vorrichtung kann es sich z. B. um eine Vorrichtung zur Durchführung selektiver Laserschmelzprozesse, d. h. um eine SLM-Vorrichtung, oder um eine Vorrichtung zur Durchführung selektiver Lasersinterprozesse, d. h. um eine SLS-Vorrichtung, handeln.

Die Pulverkammertischanordnung umfasst wenigstens zwei gegeneinander, insbesondere im Hinblick auf das Eindringen von pulverförmigem Baumaterial, abzudichtende Bauteile bzw. Bauteilgruppen. Unter einer Bauteilgruppe ist eine einander funktionell zugehörige Anordnung von, insbesondere miteinander verbundenen, Bauteilen zu verstehen. Im Weiteren ist abgekürzt allein von Bauteilen die Rede; der Begriff "Bauteil" beinhaltet auch Bauteilgruppen. Zur Abdichtung der wenigstens zwei Bauteile, umfasst die Pulverkammertischanordnung wenigstens ein Dichtelement, welches die wenigstens zwei gegeneinander abzudichtenden Bauteile im Montagezustand der Pulverkammertischanordnung gegeneinander abgedichtet. Zur Abdichtung der wenigstens zwei Bauteile gegeneinander ist, das Dichtelement zumindest abschnittsweise zwischen den wenigstens zwei Bauteilen angeordnet oder ausgebildet.

Das Dichtelement ist aus einem ein- oder mehrkomponentigen hochtemperaturbeständigen Silikonmaterial bzw. Silikon ausgebildet bzw. umfasst ein solches. Im Weiteren ist abgekürzt allein von Silikonmaterial die Rede. Durch die Ausbildung des Dichtelements aus einem entsprechenden Silikonmaterial bzw. - für den Fall, in welchem das Dichtelement ein hochtemperaturbeständiges Silikonmaterial umfasst - die Beigabe eines hochtemperaturbeständigen Silikonmaterials zu einem sonstigen Dichtelementmaterial ist das Dichtelement ausgesprochen hochtemperaturbeständig. Die Dichtungseigenschaften des Dichtelements sind sonach auch bei vergleichsweise hohen Temperaturen, wie sie insbesondere bei Ausbildung der Pulverkammertischanordnung für ein beheizbares Baumodul auf das Dichtelement einwirken können, gegeben. Je nach konkretem chemischphysikalischen Aufbau kann das Silikonmaterial und somit das Dichtelement eine Temperaturbeständigkeit bis in einen Temperaturbereich von wenigstens 200°C, insbesondere oberhalb 250°C, gegebenenfalls zumindest kurzzeitig oberhalb 300°C, aufweisen. Unter dem Begriff "Temperaturbeständigkeit" ist zu verstehen, dass das Silikonmaterial bei der jeweiligen Temperatur keine (wesentliche) Veränderung der strukturellen Eigenschaften, insbesondere der Dichtungseigenschaften, erfährt.

Das Silikonmaterial zeichnet sich jedoch nicht allein durch seine besondere Temperaturbeständigkeit, sondern auch durch seine Elastizität bzw. Flexibilität, insbesondere auch bei entsprechend hohen Temperaturen, aus. Die, wie erwähnt, insbesondere auch bei entsprechend hohen Temperaturen gegebene Elastizität bzw. Flexibilität des Silikonmaterials stellt sicher, dass das Dichtelement, z. B. aufgrund einer thermisch bedingten Versprödung, keinen seine Dichtungseigenschaften beeinträchtigenden, z. B. durch Brechen oder Reißen bedingten, Schaden nimmt.

Insgesamt liegt eine, insbesondere im Hinblick auf Dichtungswirkung und Dichtungspotential, verbesserte Pulverkammertischanordnung vor.

Bei dem Silikonmaterial kann es sich beispielsweise um ein Acetat-Silikon oder um einen Silikon-Kautschuk (VMQ) bzw. ein Silikon-Elastomer handeln. Acetat-Silikone wie auch Silikon-Kautschuke bzw. Silikon-Elastomere weisen typischerweise eine vergleichsweise hohe thermische Stabilität und somit eine hohe Temperaturbeständigkeit auf. Acetat-Silikone weisen zudem hervorragende Klebeeigenschaften auf, welche eine einfache und unverlierbare Anordnung des Dichtelements gewährleisteten.

Das Silikonmaterial kann zudem zumindest abschnitts- bzw. teilweise vernetzt sein. Die, z. B. vermittels (hoch)energetischer Strahlung realisierte, Vernetzung des Silikonmaterials verbessert typischerweise dessen thermische Stabilität und somit dessen Temperaturbeständigkeit weiter.

Im Weiteren werden Beispiele für vermittels des Dichtelements gegeneinander abzudichtende bzw. im Montagezustand der Pulverkammertischanordnung gegeneinander abgedichtete Bauteile gegeben; wie erwähnt, ist das Dichtelement stets zumindest abschnittsweise zwischen den jeweiligen Bauteilen angeordnet oder ausgebildet.

Die Pulverkammertischanordnung kann einen, insbesondere plattenartigen bzw. - förmigen, Isolierkörper und einen unterhalb des Isolierkörpers angeordneten oder ausgebildeten, insbesondere plattenartigen bzw. -plattenförmigen, Stützkörper umfassen. In diesem Fall kann das Dichtelement zumindest abschnittsweise zwischen dem Isolierkörper und dem Stützkörper angeordnet oder ausgebildet sein. Das Dichtelement dichtet den Isolierkörper gegen den Stützkörper (bzw. umgekehrt) ab, sodass ein Eindringen von pulverförmigem Baumaterial in den hierdurch definierten Dichtungsbereich nicht möglich ist. Das Dichtelement kann hierbei in einem in dem Isolierkörper, insbesondere in einem dem Stützkörper zugewandten Flächenabschnitt des Isolierkörpers, ausgebildeten nutartigen bzw. förmigen Dichtelementaufnahmebereich angeordnet oder ausgebildet sein. Dabei kann das Dichtelement den nutartigen Dichtelementaufnahmebereich zumindest abschnittsweise, gegebenenfalls vollständig, ausfüllend in dem Dichtelementaufnahmebereich angeordnet oder ausgebildet sein. Der Dichtelementaufnahmebereich kann zumindest abschnittsweise hinterschnitten ausgebildet sein, um eine stabile unverlierbare Anordnung des Dichtelements in diesem zu gewährleisten.

Die Pulverkammertischanordnung kann ferner einen eine freiliegende Oberseite der Pulverkammertischanordnung bildenden, insbesondere plattenartigen bzw. - förmigen, wenigstens ein, z. B. als Heizspirale ausgebildetes bzw. eine solche umfassendes, Heizelement umfassenden Heizkörper und den (bereits erwähnten) oder einen unter diesem angeordneten oder ausgebildeten, insbesondere plattenartigen bzw. -förmigen, Isolierkörper umfassen. In diesem Fall kann das Dichtelement zumindest abschnittsweise zwischen dem Heizkörper und dem Isolierkörper angeordnet oder ausgebildet sein. Das Dichtelement dichtet den Heizkörper gegen den Isolierkörper (bzw. umgekehrt) ab, sodass ein Eindringen von pulverförmigem Baumaterial in den hierdurch definierten Dichtungsbereich nicht möglich ist. Das Dichtelement kann hierbei in einem sich zwischen dem Heizkörper und dem Isolierkörper erstreckenden einseitig offenen fugenartigen Dichtelementaufnahmebereich angeordnet oder ausgebildet sein. Der fugenartige Dichtelementaufnahmebereich kann durch eine Ausnehmung oder Aussparung in dem Heizkörper und/oder dem Isolierkörper gebildet sein. Das Dichtelement kann den fugenartigen Dichtelementaufnahmebereich zumindest abschnittsweise ausfüllend in dem Fugenraum angeordnet oder ausgebildet sein. Der Dichtelementaufnahmebereich kann auch hier zumindest abschnittsweise hinterschnitten ausgebildet sein, um eine stabile unverlierbare Anordnung des Dichtelements in diesem zu gewährleisten.

Für alle Ausführungsformen gilt, dass das Dichtelement mit beliebigen, gegebenenfalls variierenden, Querschnittsgeometrien bzw. -profilen vorliegen kann. Die Querschnittsgeometrie des Dichtelements ist insbesondere in Abhängigkeit der geometrisch-konstruktiven Gestaltung des dieses aufnehmenden Dichtelementaufnahmebereichs gewählt. Lediglich beispielhaft werden einseitig offene, d. h. z. B. U- oder C-förmige, Querschnittsgeometrien genannt.

Sofern erforderlich, können zur Befestigung des Dichtelements in einem jeweiligen Dichtelementaufnahmebereich gesonderte Befestigungselemente, welche z. B. eine kraft- und/oder formschlüssige Befestigung des Dichtelements in dem jeweiligen Dichtelementaufnahmebereich ermöglichen, vorgesehen sein. Bei entsprechenden Befestigungselementen kann es sich z. B. um Schraub- oder Rast-/Schnappelemente handeln.

Neben der Pulverkammertischanordnung betrifft die Erfindung weiterhin ein Pulvermodul für eine Vorrichtung zur additiven Herstellung dreidimensionaler Objekte. Das Pulvermodul zeichnet sich dadurch aus, dass es eine wie beschriebene Pulverkammertischanordnung umfasst. Das Pulvermodul umfasst typischerweise eine einen Pulverraum begrenzende Pulverkammer. Die Pulverkammertischanordnung ist diesen bodenseitig abschließend in dem Pulverraum angeordnet und über eine dem Pulvermodul zugehörige motorische Antriebs- bzw. Aktoreinrichtung relativ zu der Pulverkammer bewegbar gelagert. Bei dem Pulvermodul handelt es sich insbesondere um Baumodul.

Außerdem betrifft die Erfindung eine Vorrichtung zur additiven Herstellung dreidimensionaler Objekte. Die Vorrichtung zeichnet sich dadurch aus, dass sie wenigstens ein wie beschriebenes Pulvermodul umfasst. Bei der Vorrichtung kann es sich insbesondere um eine Vorrichtung zur Durchführung selektiver Laserschmelzprozesse, d. h. um eine SLM-Vorrichtung, oder um eine Vorrichtung zur Durchführung selektiver Lasersinterprozesse, d. h. um eine SLS-Vorrichtung, handeln.

Sowohl im Zusammenhang mit dem Pulvermodul als auch im Zusammenhang mit der Vorrichtung gelten die Ausführungen im Zusammenhang mit der Pulverkammertischanordnung analog.

Die Erfindung ist anhand von Ausführungsbeispielen in den Zeichnungsfiguren näher erläutert. Dabei zeigen:

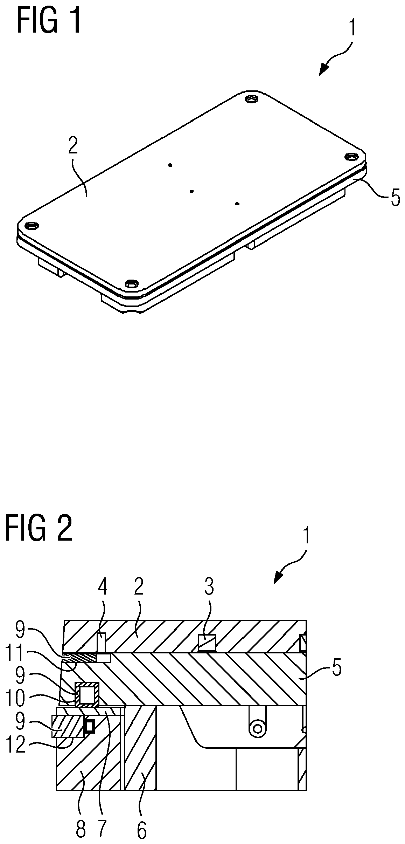

- Fig. 1, 2: je eine Prinzipdarstellung einer Pulverkammertischanordnung gemäß einem Ausführungsbeispiel.

Die Fig. 1, 2 zeigen je eine Prinzipdarstellung einer Pulverkammertischanordnung 1 gemäß einem Ausführungsbeispiel. Die Pulverkammertischanordnung 1 ist in Fig. 1 in einer perspektivischen Vollansicht und in Fig. 2 in einer (quer)geschnittenen Teilansicht dargestellt.

Die Pulverkammertischanordnung 1 stellt eine Funktionskomponente eines Pulvermoduls (nicht gezeigt), d. h. insbesondere eines Baumoduls, in welchem im Rahmen additiver Herstellungsvorgänge der eigentliche additive Aufbau dreidimensionaler Objekte erfolgt, dar. Ein entsprechendes Pulvermodul stellt wiederum eine Funktionskomponente einer Vorrichtung (nicht gezeigt) zur additiven Herstellung dreidimensionaler Objekte dar. Bei der Vorrichtung kann es sich um eine Vorrichtung zur Durchführung selektiver Laserschmelzprozesse, d. h. um eine SLM-Vorrichtung, oder um eine Vorrichtung zur Durchführung selektiver Lasersinterprozesse, d. h. um eine SLS-Vorrichtung, handeln.

Der konstruktive Aufbau der Pulverkammertischanordnung 1 umfasst mehrere Bauteile bzw. Bauteilgruppen, welche im Weiteren insbesondere anhand von Fig. 2 näher beschrieben werden:
Zunächst umfasst die Pulverkammertischanordnung 1 einen plattenförmigen Heizkörper 2. Der Heizköper 2 ist aus einem thermisch gut leitfähigen Material, d. h. z. B. aus einem Metall, insbesondere Aluminium, gebildet. Der Heizkörper 2 bzw. dessen Oberseite bildet die freiliegende Oberseite der Pulverkammertischanordnung 1. Der additive Aufbau dreidimensionaler Objekte erfolgt typischerweise auf der Oberseite des Heizkörpers 2. Der Heizkörper 2 umfasst mehrere in hierfür heizkörperseitig vorgesehenen Aufnahmeräumen (nicht näher bezeichnet) angeordneten oder ausgebildeten Heizelemente 3. Bei den Heizelementen 3 kann es sich z. B. um (elektrische) Heizspiralen handeln. Ferner umfasst der Heizkörper 2 in einem seitlichen Randbereich eine Ausnehmung 4, welche den Übertrag von thermischer Energie aus dem Heizkörper in unterhalb dieses angeordnete Bauteile der Pulverkammertischanordnung 1 verhindert bzw. hemmt.

Unterhalb des Heizkörpers 2 ist ein horizontal ausgerichteter plattenförmiger erster Isolierkörper 5 angeordnet. Der erste Isolierköper 5 ist aus einem thermisch isolierenden Material, d. h. z. B. aus einem Faserverbundmaterial, gebildet. Mit dem Bezugszeichen 6 ist ein analog ausgebildeter, jedoch vertikal ausgerichteter weiterer Isolierkörper bezeichnet, welcher unterhalb des ersten Isolierkörpers 5 angeordnet bzw. ausgebildet ist.

Im Bereich eines seitlichen Randbereichs ist unterhalb des ersten Isolierkörpers 5 ein plattenartiger Stützkörper 7 angeordnet. Der Stützkörper 7 ist typischerweise aus Metall, insbesondere Aluminium, gebildet.

Unterhalb des Stützkörpers 7 ist ein einen Teil einer Lager- bzw. Tragstruktur (nicht näher bezeichnet) bildender Tragkörper 8 angeordnet. Der Tragkörper 8 ist aus Metall, insbesondere aus Aluminium, gebildet.

Die vorgenannten Bauteile der Pulverkammertischanordnung 1 sind typischerweise durch Schraubverbindungen (nicht näher bezeichnet) aneinander befestigt, wofür die Bauteile, wie sich z. B. aus Fig. 1 ergibt, mit entsprechenden Bohrungen (nicht näher bezeichnet) versehen sind.

Insbesondere die vorgenannten Bauteile Heizkörper 2, erster Isolierkörper 5 und Stützkörper 7 stellen Bauteile der Pulverkammertischanordnung 1 dar, welche, insbesondere im Hinblick auf das Eindringen von pulverförmigen Baumaterial, gegeneinander abzudichten sind.

Anhand von Fig. 2 wird die Abdichtung der ersten Isolierkörpers 5 gegen den unterlag dieses angeordneten Stützkörper 7 erläutert. Zur Abdichtung der Bauteile umfasst die Pulverkammertischanordnung 1 ein Dichtelement 9. Ersichtlich ist das Dichtelement 9 zwischen den Bauteilen, d. h. zwischen dem ersten Isolierkörper 5 und dem Stützkörper 7, angeordnet. Das Dichtelement 9 dichtet den ersten Isolierkörper 5 gegen den Stützkörper 7 (bzw. umgekehrt) ab, sodass ein Eindringen von pulverförmigem Baumaterial in den hierdurch definierten Dichtungsbereich nicht möglich ist. Das Dichtelement 9 ist in einem dem Stützkörper 7 zugewandten Flächenabschnitt des ersten Isolierkörpers 5 ausgebildeten nutförmigen Dichtelementaufnahmebereich 10 angeordnet bzw. ausgebildet. Ersichtlich weist das Dichtelement 9 eine U-förmige Querschnittsgeometrie auf, sodass es den Dichtelementaufnahmebereich 10 abschnittsweise ausfüllt. Selbstverständlich ist es auch denkbar, dass ein entsprechendes Dichtelement 9 den Dichtelementaufnahmebereich vollständig ausfüllt.

Das Dichtelement 9 ist aus einem ein- oder mehrkomponentigen hochtemperaturbeständigen Silikonmaterial bzw. Silikon ausgebildet. Durch die Ausbildung des Dichtelements 9 aus einem entsprechenden Silikonmaterial ist das Dichtelement 9 hochtemperaturbeständig. Die Dichtungseigenschaften des Dichtelements 9 sind sonach auch bei vergleichsweise hohen Temperaturen, wie sie bei der in dem vorliegenden Ausführungsbeispiel gezeigten Ausbildung der Pulverkammertischanordnung 1 für ein beheizbares Baumodul auf das Dichtelement 9 einwirken können, gegeben. Je nach konkretem chemischphysikalischen Aufbau kann das Silikonmaterial und somit das Dichtelement 9 eine Temperaturbeständigkeit bis in einen Temperaturbereich von wenigstens 200°C, insbesondere oberhalb 250°C, gegebenenfalls zumindest kurzzeitig oberhalb 300°C, aufweisen.

Dass das Dichtelement 9 bildende Silikonmaterial zeichnet sich jedoch nicht allein durch seine besondere Temperaturbeständigkeit, sondern auch durch seine Elastizität bzw. Flexibilität, insbesondere auch bei entsprechend hohen Temperaturen, aus. Die auch bei entsprechend hohen Temperaturen gegebene Elastizität bzw. Flexibilität des Silikonmaterials stellt sicher, dass das Dichtelement 9, z. B. aufgrund einer thermisch bedingten Versprödung, keinen seine Dichtungseigenschaften beeinträchtigenden, z. B. durch Brechen oder Reißen bedingten, Schaden nimmt.

Bei dem Silikonmaterial kann es sich beispielsweise um ein Acetat-Silikon oder um einen Silikon-Kautschuk (VMQ) bzw. ein Silikon-Elastomer handeln. Acetat-Silikone bzw. Silikon-Kautschuke bzw. Silikon-Elastomere weisen typischerweise eine hohe thermische Stabilität und somit eine hohe Temperaturbeständigkeit auf. Acetat-Silikone weisen zudem hervorragende Klebeeigenschaften auf, welche eine einfache und unverlierbare Anordnung des Dichtelements 9 in dem Dichtelementaufnahmebereich 10 gewährleisteten.

Das Silikonmaterial kann zudem zumindest abschnitts- bzw. teilweise vernetzt sein. Die, z. B. vermittels (hoch)energetischer Strahlung realisierte, Vernetzung des Silikons verbessert typischerweise dessen thermische Stabilität und somit dessen Temperaturbeständigkeit weiter.

Anhand von Fig. 2 ist ersichtlich, dass die Pulverkammertischanordnung 1 weitere Dichtelemente 9 umfasst:
Ein zweites Dichtelement 9, welches prinzipiell zumindest im Hinblick auf das dieses bildende Material analog dem vorstehend beschriebenen, in dem isolierkörperseitigen Dichtelementaufnahmebereich 10 angeordneten ersten Dichtelement 9 ausgebildet sein kann, ist in einem sich zwischen dem Heizkörper 2 und dem ersten Isolierkörper 5 erstreckenden einseitig offenen fugenartigen Dichtelementaufnahmebereich 11 angeordnet. Der Dichtelementaufnahmebereich 11 kann auch als Dehnungsfuge bezeichnet bzw. erachtet werden.

Ein drittes Dichtelement 9, welches prinzipiell zumindest im Hinblick auf das dieses bildende Material analog dem in dem isolierkörperseitigen Dichtelementaufnahmebereich 10 angeordneten ersten Dichtelement 9 ausgebildet sein kann, ist in einem sich zwischen dem Stützkörper 7 und dem Tragkörper 8 erstreckenden einseitig offenen Dichtelementaufnahmebereich 12 angeordnet. Das dritte Dichtelement 9 muss jedoch nicht aus einem hochtemperaturbeständigen Silikonmaterial gebildet sein; bei dem dritten Dichtelement 9 kann es sich auch um eine Filzdichtung handeln.

Grundsätzlich gilt, dass ein jeweiliges Dichtelement 9 mit beliebigen, gegebenenfalls variierenden, Querschnittsgeometrien bzw. -profilen vorliegen kann. Die Querschnittsgeometrie eines jeweiligen Dichtelements 9 ist insbesondere in Abhängigkeit der geometrisch-konstruktiven Gestaltung des dieses aufnehmenden Dichtelementaufnahmebereichs 10, 11, 12 gewählt.

Sofern erforderlich, können zur Befestigung eines Dichtelements 9 in einem jeweiligen Dichtelementaufnahmebereich 10, 11, 12 gesonderte Befestigungselemente (nicht gezeigt), welche z. B. eine kraft- und/oder formschlüssige Befestigung des Dichtelements 9 in dem jeweiligen Dichtelementaufnahmebereich 10, 11, 12 ermöglichen, vorgesehen sein. Bei entsprechenden Befestigungselementen kann es sich z. B. um Schraub- oder Rast-/Schnappelemente handeln.

## Patentansprüche

1. Pulverkammertischanordnung (1) für ein Pulvermodul, insbesondere ein Baumodul, einer Vorrichtung zur additiven Herstellung dreidimensionaler Objekte, umfassend
ein erstes plattenförmiges Bauteil, welches als Heizkörper (2) ausgebildet ist oder einen solchen umfasst;
ein zweites plattenförmiges Bauteil, welches als Isolierkörper (5) ausgebildet ist oder einen solchen umfasst; wobei das zweite plattenförmige Bauteil mit dem ersten plattenförmigen Bauteil gekoppelt ist, wobei eine Unterseite des ersten plattenförmigen Bauteils eine Oberseite des zweiten plattenförmigen Bauteils kontaktiert, wobei das zweite plattenförmige Bauteil umfasst:
einen entlang zumindest eines Teils eines Umfangs des zweiten plattenförmigen Bauteils und entlang wenigstens eines Teils der Oberseite des zweiten plattenförmigen Bauteils offenen ersten Dichtelementaufnahmebereich (11), und
einen an den Umfang des zweiten plattenförmigen Bauteils angrenzenden und im Bereich der Unterseite des zweiten plattenförmigen Bauteils zumindest teilweise offenen, insbesondere nutförmigen, zweiten Dichtelementaufnahmebereich (10);
ein erstes Dichtelement (9), welches in dem ersten Dichtelementaufnahmebereich (11) angeordnet ist, wobei das erste Dichtelement (9) eine Dichtung zwischen der Unterseite des ersten plattenförmigen Bauteils und der Oberseite des zweiten plattenförmigen Bauteils definiert, und
ein zweites Dichtelement (9), welches in dem zweiten Dichtelementaufnahmebereich (10) angeordnet ist und eine Dichtung zwischen einer Unterseite des zweiten plattenförmigen Bauteils und einer Oberseite eines Tragkörpers (8) definiert, wobei der Tragkörper (8) eingerichtet ist, die Pulverkammertischanordnung (1) zu tragen.

2. Pulverkammertischanordnung nach Anspruch 1, **dadurch gekennzeichnet, dass** der Tragkörper (8) unterhalb eines Stützkörpers (7) angeordnet ist, wobei der Stützkörper (7) zumindest teilweise die Oberseite des Tragkörpers (8) definiert, und wobei das zweite Dichtelement (9) eine Dichtung zwischen der Unterseite des zweiten plattenförmigen Bauteils und einer Oberseite des Stützkörpers (7) definiert.

3. Pulverkammertischanordnung nach Anspruch 2, **dadurch gekennzeichnet, dass** der Tragkörper (8) einen zumindest teilweise entlang eines Umfangs des Tragkörpers (8) offenen dritten Dichtelementaufnahmebereich (12) aufweist, wobei der dritte Dichtelementaufnahmebereich (12) eingerichtet ist, ein drittes Dichtelement (9) aufzunehmen.

4. Pulverkammertischanordnung nach Anspruch 3, **dadurch gekennzeichnet, dass** die Pulverkammertischanordnung (1) umfasst:
den Tragkörper (8); und
das in dem dritten Dichtelementaufnahmebereich (12) angeordnete dritte Dichtelement (9).

5. Pulverkammertischanordnung nach Anspruch 4, **dadurch gekennzeichnet, dass** das dritte Dichtelement (9) eine Filzdichtung umfasst.

6. Pulverkammertischanordnung nach einem der Ansprüche 1 bis 5, **dadurch gekennzeichnet, dass** das erste Dichtelement (9) und/oder das zweite Dichtelement (9) ein hochtemperaturbeständiges Silikonmaterial ist.

7. Pulverkammertischanordnung nach Anspruch 6, **dadurch gekennzeichnet, dass** das hochtemperaturbeständige Silikonmaterial ein Acetat-Silikon und/oder ein Silikon-Kautschuk ist.

8. Pulverkammertischanordnung nach Anspruch 6 oder 7, **dadurch gekennzeichnet, dass** das hochtemperaturbeständige Silikonmaterial zumindest abschnittsweise vernetzt ist.

9. Pulverkammertischanordnung nach einem der Ansprüche 6 bis 8, **dadurch gekennzeichnet, dass** das hochtemperaturbeständige Silikonmaterial eine Temperaturbeständigkeit in einem Temperaturbereich zwischen 200°C und 300°C aufweist.

10. Pulverkammertischanordnung nach einem der vorhergehenden Ansprüche, **dadurch gekennzeichnet, dass** der erste Dichtelementaufnahmebereich (11) eine Dehnungsfuge umfasst.

11. Pulverkammertischanordnung nach einem der vorhergehenden Ansprüche, **dadurch gekennzeichnet, dass** das erste plattenförmige Bauteil in einem seitlichen Randbereich eine Ausnehmung (4) aufweist, welche den Übertrag von thermischer Energie aus dem Heizkörper in unterhalb dieses angeordnete Bauteile der Pulverkammertischanordnung (1) verhindert bzw. hemmt, und wobei die Ausnehmung (4) offen zu zumindest einem Teil der Unterseite des plattenförmigen Bauteils ist.

12. Pulverkammertischanordnung nach Anspruch 11, **dadurch gekennzeichnet, dass** die Ausnehmung (4) offen zu dem ersten Dichtelementaufnahmebereich (11) ist.

13. Pulverkammertischanordnung nach einem der vorhergehenden Ansprüche, **dadurch gekennzeichnet, dass** der Isolierköper (5) aus einem Faserverbundmaterial gebildet ist.

14. Pulverkammertischanordnung nach einem der vorhergehenden Ansprüche, **gekennzeichnet durch** einen unterhalb des zweiten plattenförmigen Bauteils angeordneten vertikal ausgerichteten weiteren Isolierkörper (6), welcher insbesondere aus einem Faserverbundmaterial gebildet ist.

15. Pulvermodul für eine Vorrichtung zur additiven Herstellung dreidimensionaler Objekte, umfassend eine Pulverkammertischanordnung (1) nach einem der vorhergehenden Ansprüche

16. Vorrichtung zur additiven Herstellung dreidimensionaler Objekte, umfassend ein Pulvermodul nach Anspruch 15.
